# EUROPEAN PATENT SPECIFICATION

(11) **EP 0 863 216 B1**
(45) Date of publication and mention of the grant of the patent: **18.09.2002**
(21) Application number: 98103952.2
(22) Date of filing: 05.03.1998
(51) Int. Cl.: C22B 7/00, C22B 1/00, C22B 21/00, B09B 3/00, C22B 15/00, C21D 1/74, F27D 7/06, F23G 5/027, C10B 49/02

(54) **Method of treating metal/plastic composite waste material by heat decomposition**
Verfahren zur Aufarbeitung von Metall/Kunststoff-Verbundabfällen durch thermische Zersetzung
Procédé de retraitement de déchets composites métal/plastique par dissociation thermique

(30) Priority: 05.03.1997 JP 6561797
(43) Date of publication of application: 09.09.1998
(73) Proprietor: EBARA CORPORATION, Ohta-ku, Tokyo (JP)
(72) Inventor: Naitou, Takeyuki, Yokohama-shi, Kanagawa-ken (JP); Kozuka, Kouji, Yamato-shi, Kanagawa-ken (JP); Nakano, Ryoji, Yokohama-shi, Kanagawa-ken (JP)
(74) Representative: Wagner, Karl H., Dipl.-Ing.

(56) References cited:
- EP-A- 0 651 064
- DD-A- 31 283
- DD-A- 65 779
- US-A- 4 202 537
- US-A- 4 548 651
- US-A- 4 784 603
- US-A- 4 789 332
- US-A- 4 924 785
- PATENT ABSTRACTS OF JAPAN vol. 97, no. 10, 31 October 1997 & JP 09 170034 A (EBARA CORPORATION), 30 June 1997
- DUNFORD & ELLIOTT: "Cleaning metal swarf and turnings" METALLURGIA, vol. 71, no. 427, May 1965, page 206 XP002075680 london, gb
- DATABASE WPI Section Ch, Week 9809 Derwent Publications Ltd., London, GB; Class A35, AN 98-094915 XP002075681 & JP 09 323 076 A (EBARA CORP)

## Description

The present invention relates to a method of treating a composite waste material, and more particularly to a composite waste material treating method for recovering metals from a product waste material produced from a plurality of materials constituted of a ferrous material, a nonferrous material and a nonmetallic material such as a plastic.

Recently, many products such as home appliances and electronic devices are made of a composite material comprising plastics and various kinds of metals, with the result that it is difficult to separate out the various materials as waste. This has serious environmental implications. A method of manually decomposing a product and thereafter recovering valuable parts such as metals is known. However, in this method, since most of the separating and recovering operation is performed manually, resulting in such poor efficiency as to be applicable only to those products where a large amount of metal is present, such as automobiles.

In contrast, in home appliances and electric devices in which a large amount of plastic is present and metal parts are included in a relatively small amount, such parts are generally not recovered.

In conventional waste material treating methods the waste material is crushed by a crusher, and crushed pieces of the plastic become mixed with metal parts.

As mentioned above, at the present time, there is no method of simply treating waste materials such as electronic devices. One option which has been considered is to crush waste appliances after freezing. However, this method is not in use as the process required is too complex to be practical. In a conventional fluidized bed gasification furnace, when, for example, an iron plate having a size of around 10 cm square is present in the treating material, after gasification of combustible materials the iron remains in the fluidized bed and must be removed from the furnace together with the fluidized sand. The incombustible material and sand are then separated by vibration, and the sand is returned to the gasification furnace and the incombustible material discharged.

In order to discharge incombustible material of a large size, it is necessary to make an outlet of a gasification furnace large, an amount of removed sand becomes great, and a heat loss within the furnace becomes great when the amount of sand becomes large. When heat loss becomes excessive, the generated gas is burned within the gasification furnace in order to obtain a heat gasification. However, in this case, it is necessary to assist gasification by burning a supplemental fuel.

Further, when the burning rate within the gasification furnace is increased, the metals are oxidized. To remove metals provided in the gasification furnace without oxidation, it is necessary to limit the size of metals for treatment.

Consequently, a product such as a refrigerator can not be treated in a conventional fluidized bed gasification furnace without first being crushed.

Further, in a conventional gasification furnace, even when an incombustible material such as metal is crushed to a small size, for example, 10 cm square, any impurities mixed in with the waste material remain in the bottom of the furnace, thereby preventing fluidization, so that it is necessary to frequently remove the furnace sand together with any impurities.

Consequently, heat loss from a gasification furnace becomes quite large, and a temperature in the gasification furnace is lowered to such a degree that gasification can be performed only by using a supplemental fuel.

Further, attention is drawn to US-A-4,784603 and US-A-4,789,332 which are both directed to a process and apparatus for removing volatile contaminants from scrap metal. A process is carried out in a furnace maintained at a relatively constant temperature and having a first zone in which volatiles contained on the surface of a metal are vaporized and a second zone in which carbon contained on the surface of the metal is pyrolyzed. The furnace also has a conveyor for transporting metal therethrough at a specific speed. The process includes the step of vaporizing and fluidizing or sufficiently vaporizing the volatiles to produce fumes containing unburned hydrocarbons without oxidizing the metal. The hydrocarbon fumes are then burned to produce hot gas which is recirculated to the furnace so as to contact new incoming scrap metal.

Further, US-A-4,548,651 discloses a method for a reclaiming scrap metal contaminated with hydrocarbon combustibles by vaporizing the hydrocarbon combustibles contaminating the metal in a kiln so as to produce partially unburned fumes in said kiln. The fumes are separated from the metal as the metal is discharges from the kiln, and the separated fumes are then transported to a heat generating means secured therein. The fumes are incinerated in the heat generating means by the flame of said burner means so as to provide hot gas which is recirculated to the kiln for purposes of conducting the aforementioned vaporization step.

The EP-A-0 651 064 A1 discloses a device for the pretreatment of electronic scrap, comprising a scroll cylinder with a worm screw inside of it, endowed with inputs and outputs for thermal exchange fluid and electronic scrap to be treated; further a furnace comprising such a device, further comprising input and output air barriers; a refrigerator comprising such a device; as well as a process for the pretreatment of electronic scrap making use of such a furnace and refrigerator.

Further, document DD 65779 is mentioned which is directed to the automatic sorting of solid articles of different chemical composition. Additionally, DD 31283 is mentioned which discloses an apparatus for through type annealing of work pieces or components in a protective gas atmosphere.

Further, JP-A-09170034 is mentioned which is directed to a method for recovering metal from waste by bringing plastic/metal composite waste into direct contact with a heat medium, preferably in a moving layer and preferably granular as, for example, a silica sand.

Attention is also drawn to EP-A-0 451 323 which discloses a method for preheating scrap iron mixed with plastic, rubber and resinous, i.e. organic materials and which is intended for electric furnaces, in particular electric arc furnaces. The method comprises the step of transforming the plastic, rubbery or resinous and like materials of organic nature present in the scrap iron to advantageously eliminate them by a path able to produce thermal energy usable for preheating the scrap to be melted, said path consisting of pyrolysis in an environment fed both with the scrap to be melted and with said organic materials, the whole being shredded before the pyrolysis.

In accordance with the present invention a method as set forth in claim 1 and a plant or apparatus as set forth in claim 5 are provided. Preferred embodiments are disclosed in the dependent claims.

The present invention has been made by taking the conventional arts mentioned above into consideration, and an object of the invention is to provide a method of treating a composite waste material which can simply and effectively recover metals and perform a material cycle of the metals in the case of a product containing a large amount of plastic.

In order to achieve the object mentioned above, in accordance with the present invention, there is provided a method of treating a composite waste material as defined in claim 1 comprising a step of separating and recovering metals after thermally treating the composite waste material at high temperature to thereby wholly or partly disassemble the composite waste material and then bringing the composite waste material into direct contact with a high temperature gas in an anoxic state or in a state containing only a small amount of oxygen.

In the treatment method mentioned above, the composite waste material is disassembled under high temperature and metals are then separated out using a vibrating sieve machine. The heat treatment is performed at a temperature of 500°C to 900°C. However, when it is desired to melt a fusible metal like aluminum, it is preferable that the heat treatment is performed at a temperature of 700°C to 800°C, and when it is desired to recover aluminum, it is preferable that the heat treatment is performed at a temperature equal to or less than 700°C, preferably at a temperature equal to or less than 650°C. As mentioned above, since plastics are gasified, remaining metals can be easily separated out and recovered.

Gas generated in the treatment can be introduced into an incinerating apparatus or a gasification melting apparatus for treating the waste material in another system, and a part of the generated gas is used for generating a high temperature gas by being brought directly into contact with the composite waste material.

Further, it is preferable for the metals to be separated and recovered by crushing or finely crushing the thermally treated composite waste material, and the crushing or fine crushing is performed by pressing the thermally treated composite waste material. It is preferable for such pressing to be performed under a warm state providing a low tensile strength to the metal, and further, the fine crushing can be performed by cutting.

In the treatment method mentioned above, a fusible metal can be melted and separated.

As mentioned above, the invention relates to a method of treating a composite waste material in large quantities by previously gasifying a combustible material such as plastic in a gasification furnace, selecting a metal part, and separating and recovering metals preferably by pressing and fine crushing under a warm state, and more preferably relates to a method of treating a product including a large quantity of plastic at low cost to thereby easily recover any metals.

In waste home appliances such as refrigerators, plastic and a thermal insulating material is fixed to an iron plate by an adhesive material, so that it is hard to completely separate these materials from the iron plate by a crushing method, and further, they can not completely removed manually. In accordance with the present invention, since the waste home appliances are first thermally treated and any adhesive material is gasified, carbonic material remains in the iron plate and any waste material can be easily separated out.

Next, the invention will be described in detail. At first, gasification of plastic will be described. It is known that normally, plastics are thermally decomposed and gasified when they are heated to a temperature equal to or more than 200 to 450°C.

Recently, as a countermeasure against dioxin generation, a process is employed whereby a composite waste material is first gasified in a gasification furnace, with the generated gas being introduced to a melting furnace for subsequent gasification to take place at a temperature of about 1300 to 1400°C.

The invention can use a gas having a temperature of 600 to 800°C. In addition, the same treatment can be performed by providing an atmospheric furnace in an anoxic state or with only a small amount of oxygen (not including a vacuum state) being present, utilizing the exhaust gas in the current incinerator.

Normally, various kinds of plastics are contained in a recovered composite waste material, thereby necessitating different temperatures for gasification. Further, the higher the decomposition temperature is, the greater the gas component. Still further, together with gasification treatment of the plastics, in order to melt and separate fusible metal such as aluminum and heavy metals, and further for the purpose of preventing the generation of clinker within the furnace, heat treatment is performed at a temperature of 500 to 900°C. However, as mentioned above, when it is desired to melt aluminum, heat treatment is performed at a temperature of 700 to 800°C, and when it is desired to recover aluminum, heat treatment is performed at a temperature equal to or less than 700°C, and preferably at a temperature equal to or less than 680°C.

When at least a small amount of oxygen exists, oxidation is hardly advanced at a temperature of 700°C. Particularly, in the case of copper wire, when the temperature becomes equal to or more than 700°C, oxidation is advanced and the wire becomes brittle even when the amount of oxygen present is as low as 5%.

The high temperature gas as a heat source for the heat treatment is obtained by a method of using a gas containing hardly any oxygen in the gasification furnace and thermally exchanging the combustion exhaust gas with the combustion exhaust gas having a high temperature so as to be used as a high temperature gas, and a method of using the exhaust gas containing only a small amount of oxygen and burning the gas generated by the heat treatment so as to use a high temperature gas.

Particularly, in the case of using an exhaust gas containing little oxygen, in order to quickly react the generated gas with the remaining oxygen contained in the exhaust gas, there is an advantage that the exhaust gas can be used for stirring.

Since a main object of the method of the present invention is to recover the metal in the refrigerator in an unoxidised state, it is necessary for any oxygen component contained in the exhaust gas to react with the generated gas before reaching the metal and be consumed. Further, the reaction of the generated gas with only a small a amount of oxygen produces heat required for gasification, so that the gasification can be smoothly performed. Accordingly, it is desirable for the generated gas to be sufficiently stirred.

Further, when the combustible material is gasified, the carbonic material remains, however, it is clear that a method of blowing out the carbonic material from the metals by the exhaust gas, discharging it out of the heat treatment chamber and burning and treating it at a later step is more advantageous than a method of taking the thermally treated metals out from the heat treatment chamber, separating the carbonic material by selection under an air stream and treating the separated carbonic material at a later step.

Still further, in the case of taking the thermally treated metal out from the present heat treatment chamber, when the metal at a temperature of 600°C is exposed to ambient air, oxidation is promoted. As a countermeasure therefor, it is preferable to discharge generated gas remaining in the present heat treatment chamber after the heat treatment is finished and to use the exhaust gas having a little amount of oxygen so as to prevent explosion even when ambient air enters the heat treatment chamber. Since the exhaust gas has a low temperature of about 200°C, the exhaust gas can cool the thermally treated metal to a temperature where by oxidation is not promoted even when the metal is exposed to ambient air.

Next, separation and recovery of metals will be described below. The composite waste material is brought into a state wherein it can be easily decomposed by gasification, and decomposition and selection (sieve selection) can be performed by using a vibration sieve device. By using the vibration sieve device, objects held in place by screws made of a fusible material, objects fixed by an adhesive material and objects fixed by plastic clamps can be separated and recovered. Since plastics tend to be mounted by means of screws separation by vibration sieve can be readily performed following heat treatment

The remaining metals are separated and recovered as they are if they can be easily decomposed. Further, they can be crushed by a known crushing device. However, since many products are not easily decomposed due to a complex combination of the different kinds of metals, it is desirable or these remaining metals to be compressed by a scrap press in order to make cutting easy and thereafter for the metals to be cut and finely crushed.

In the conventional shearing type crushing device or impact type crushing device, when different metals are present, "surrounding phenomenon" is generated at a time of crushing, and it is hard to separate and select metal at a later stage.

An embodiment of the invention further includes the step of cutting and finely crushing metal to a size of, for example 0.1 mm to 10 mm and separating and recovering the metal without generating "surrounding phenomenon", as a method for improving the process mentioned above.

At first, the remaining metal is put into a scrap press adjacent to the heat treatment furnace while maintaining a heat in the heat treatment chamber, with warm pressing being performed in a state that preferably, the tensile strength of the metal is lowered to about half its strength at room temperature and at a temperature of 350 to 550°C so that the metal is not significantly oxidized to thereby produce a block. By performing pressing at a warm temperature, energy required for pressing can be reduced, so that running costs can be minimized. After formation, the block is treated with a fine crushing device.

A known fine crushing device can be used. Separation and selection of metals can be facilitated by using, for example, the following cutting type crushing device.

Such a fine crushing device is constituted from a cutter, a portion for supporting the cutter and a case for surrounding them. The pressed block (work) is inserted and rotated or fixed, to thereby finely crush the block into pieceshaving a size of, for example, 0.1 to 10 mm. The size of the pieces can be selected in correspondence to a size of the used cutter and a feeding speed of the cutter.

The finely crushed pieces are discharged to an outer side of the apparatus by a conveyor disposed in right and left portions or a lower portion of the rotor.

The method of present invention comprises the steps of directly bringing the composite waste material which is partly dissolved or not dissolved into contact with a high temperature gas containing little or no oxygen and thermally treating the composite waste material under a high temperature atmosphere, and after the thermally treating, separating and recovering the metal from the thermally treated composite waste material.

In the method, the metal may be separated and recovered by disassembling and selecting the thermally treated composite waste material using a vibrating sieve machine. A gas generated in the step of thermal treatment may be introduced to an incinerating apparatus or a gasification melting apparatus for treating a waste material in another system. A part of said generated gas may be used for generating said high temperature gas directly bringing it into contact with the waste material. The step of separating and recovering the metal may include the steps of pressing, cutting and pulverizing the thermally treated metal at a warm temperature. Metal in the waste material having a low melting point may be melted and separated.

The present invention also provides a plant for treating a waste material of a composite material including plastic and metal. The plant is as defined in claim 5 and comprises: a heat treatment chamber having a closable gas inlet, a closable gas outlet, a closable material charging opening, and a closable material discharge opening; a gas passage for introducing a high temperature gas containing little or no oxygen produced by a gas generator through said closable gas inlet into said heat treatment chamber; and a purge gas supply means for supplying a purge gas into said heat treatment chamber to suppress burning of the waste material in said heat treatment chamber.

The plant of the present invention may comprise a purge front chamber formed between said closable gas inlet and a first partition disposed in said gas passage, and a purge rear chamber formed between said closable gas outlet and a second partition disposed in a duct connected to said closable gas outlet.

In the plant of the present invention said purge gas supply means may include a first valve through which said purge gas is introduced into said heat treatment chamber, a second valve through which said purge gas is introduced into said purge front chamber, and a third valve through which said purge gas is introduced into said purge rear chamber. The closable gas inlet and said first partition may form a first double door for separating said heat treatment chamber from said gas generator. The closable gas outlet and said second partition form a second double door for separating said heat treatment chamber from outer portion of said heat treatment chamber. The second double door forms both said closable material charging opening and said closable material discharging opening.

In the plant of the present invention, said gas generator may be a gasification furnace using a fluidized bed furnace, and said purge gas is advantageously N₂ or an inert gas.

Figs. 1(a) and (b) show the structure of a gasification melting furnace having a heat treatment chamber for realizing a treating method in accordance with the invention. Fig. 1(a) is a schematic view in the case that a treating method in accordance with the invention is applied to a gasification melting furnace, and Fig. 1(b) is a partly schematic view in the case of using all of the gas generated in a gasification furnace.

Figs. 2(a) to 2(f) are schematic views which explain an operation of a heat treatment chamber for realizing the treating method in accordance with the invention.

Fig. 3 is a schematic view in the case that the treating method in accordance with the invention is applied to an incinerator.

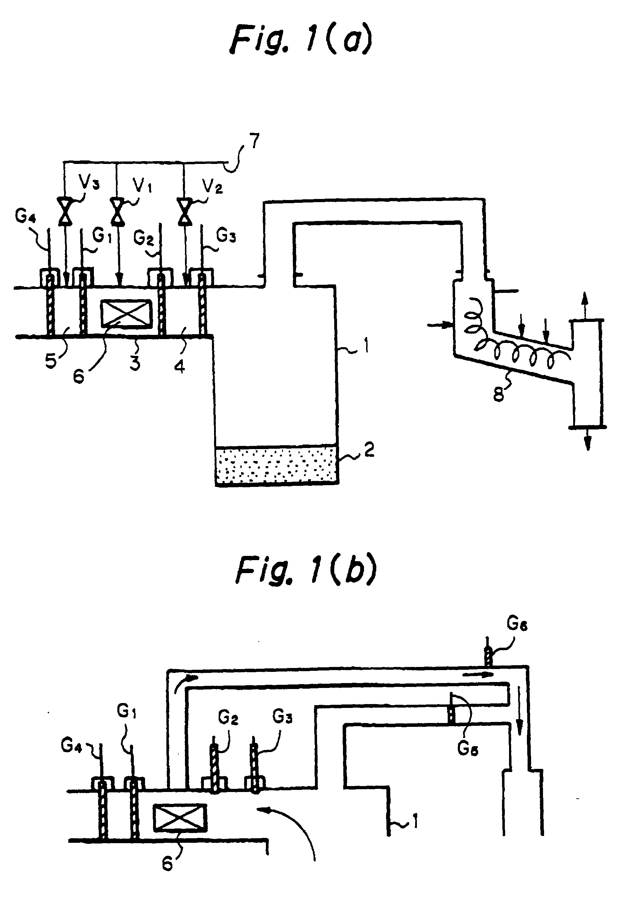

Next, the invention will be described below with reference to the attached drawings. Fig. 1(a) is a schematic view in the case of using a part of the gasified gas generated in a gasification furnace, and Fig. 1(b) is a partly schematic view in the case of using all amount of the gas.

In Figs. 1(a) and 1(b), reference numeral 1 denotes a gasification furnace, reference numeral 2 denotes a fluidized bed, reference numeral 3 denotes a heat treatment chamber, reference numeral 4 denotes a purge front chamber, reference numeral 5 denotes a purge rear chamber, reference numeral 6 denotes a composite waste material, reference numeral 7 denotes an introduction passage for an inert gas in order to prevent the gas or the exhaust gas from burning abnormally, reference numeral 8 denotes a melting furnace and reference symbol G₁-G₄ denotes a double door for shuttering the heat treatment chamber.

Waste home appliances, electronic devices and the other waste materials 6 are placed in the heat treatment chamber 3 belonging to a portion having little oxygen in the gasification furnace 1 after pressing or in an integral configuration as they are, or after being partly disassembled. The heat treatment chamber 3 may be attached to an atmosphere furnace containing little or no oxygen, or a rotary kiln, or a portion having little oxygen in an incinerator.

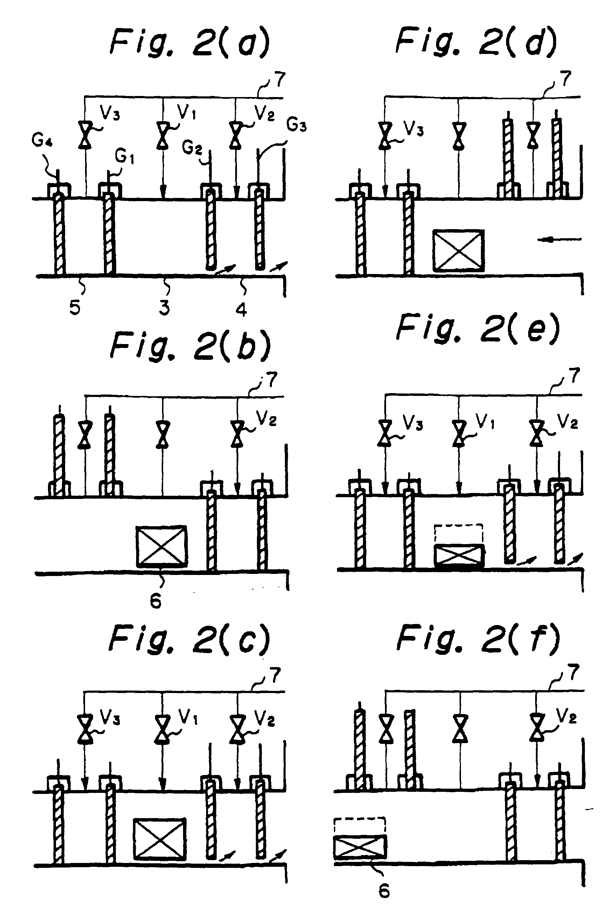

Figs. 2(a) to 2(f) are views of explaining an operation of the heat treatment chamber for thermally treating the composite waste material.

In Figs. 2(a) to 2(f), the introduction passage 7 for filling an N₂ gas or an inert gas for shutting an oxygen so that the exhaust gas in the gasification furnace 1 is not abnormally burned is provided in the heat treatment chamber 3. Further, the heat treatment chamber 3 is provided with the double door G₁-G₄ for separating between an outer portion and the heat treatment chamber, and between the heat treatment chamber and the incinerator 1 for the purpose of preventing the oxygen from entering into the furnace. Reference symbol V₁-V₃ denotes a switching valve.

With reference to Figs. 2(a) to 2(f), an operation procedure of the heat treatment for the waste material will be described below. At first, the gate G₁-G₄ is closed and an inert gas is introduced to the heat treatment chamber 3 and the purge front chamber 4 from the introduction passage 7 so that the N₂ gas or the exhaust gas is not abnormally burned by opening V₁ and V₂ (Fig. 2(a)). Next, the waste material 6 is introduced to the heat treatment chamber 3 by opening G₁ and G₄ with introducing the N₂ gas to the purge front chamber 4 (Fig. 2(b)). At this time, sufficient attention is required so that the air is not sealed in the waste material (when the air is stored, the waste material is abnormally burned at a time of entering the gas).

After the waste material 6 is introduced, all G₁-G₄ are closed, all V₁-V₃ are opened, all the chambers 3 to 5 disposed between the double doors are purged by the N2 gas or the exhaust gas under a pressure higher than the incinerator and the atmospheric pressure, and care is taken not to allow abnormal burning at a time of introducing the combustion gas (Fig. 2(c)). After the heat treatment chamber 3 is filled with the N2 gas or the exhaust gas, the doors G₂ and G₃ of the duct communicating with the gasification furnace or the incinerator are slowly opened, and a hot draft constituted by a reducing atmosphere is introduced to the heat treatment chamber (Fig. 2(d)). At this time, the draft is fed as occasion demands so that the temperature of the heat treatment chamber becomes 500 to 900°C. The introduced gas is burned under the air supply, so that the temperature can be increased. Further, in order to prevent dust and tar introduced with the gas from accumulating, an inclination can be provided in the introduction portion.

The temperature is held for an appropriate time, thereby gasifying a plastic component contained in the waste material.

Among the metal contained in the product, aluminum, lead, silicon, cadmium and zinc which have a low melting temperature are melted and separated from the waste material. A receiving table for the molten metal may be provided thereunder.

Further, a metal portion fixed by screws made from plastic, metal portions fixed by the adhesive material, or brazed metal portion can be easily decomposed by heating.

Still further, in the home appliances, in the case of a refrigerator, for example, four times the amount of refrigerant freon is used in a heat insulating material for foaming in addition to the refrigerant freon.

In the conventional method of crushing and treating the refrigerator, the refrigerant freon is removed before crushing, however, the freon discharged at a time of crushing among the freon contained in the heat insulating material is absorbed by active carbon together with ambient air, decarburized and liquidized so as to be recovered, and the freon contained in the crushed heat insulating material is finely crushed or compressed so as to be deaerated and compressed and cooled so as to be liquidized and recovered.

In order that the liquidized freon is further decomposed at a high temperature so as to prevent the freon from being discharged into ambient air, a complex process is required and operating costs are increased.

In comparison, in accordance with the heat treatment method of the invention, the gasified freon of a degree equal to or more than 99.9% can be decomposed at a later step together with other generated gas, for example, 800°C of a burning temperature and 2 seconds of a storing time in a high temperature treatment portion (THE 7TH WASTE MATERIAL SOCIETY RESEARCH RESULT JOURNAL REPORT, 1996, page 933, OSAKA CITY OR THE LIKE).

For example, a burning and treating method such as introducing the generated gas to a combustion chamber in an adjacent incinerator can be applied. Further, the structure may be made such that the combustion chamber is provided at the back of the present heat treatment, the generated gas is burned there, and the combustion gas is introduced to the combustion gas treatment apparatus at the back of the combustion chamber of the adjacent incinerator.

In the case that the gasification melting equipment is provided at the later step, the gas generated in the present heat treatment chamber may be introduced to the melting equipment so as to be burned. In the adjacent gasification melting equipment, the gas generated in the heat treatment chamber is burned at a high temperature of 1300 to 1400°C in the melting furnace as a light air. An advantage of this gasification melting equipment is to obtain a high temperature of 1300 to 1400°C and to incinerate dust contained in the gas generated in the heat treatment chamber.

Carbon generated in the present heat treatment chamber can be also burned within the melting furnace, and when a silica component exists, this can also be melted. Further, under a high temperature of 1300 to 1400°C, there are merits that no dioxin is generated, and any freon can be substantially completely decomposed at a degree equal to or more than 99.99%.

Further, the freon thermally decomposed in the combustion furnace and the melting furnace reacts with Ca contained in the waste material or additionally added so as to become CaF, thereby becoming harmless. The gas generated by decomposing the plastics is employed for burning in the combustion furnace or the melting furnace, and may be thermally recycled as a heat source for generating electricity, melting slag or the like.

As mentioned above, the present treatment method is gentle for the earth and requires a low cost.

After the gasification is completed, the doors G2 and G3 of the duct communicating with the gasification furnace or the incinerator are closed to a state of being slightly opened, the N₂ gas or the exhaust gas is purged to the heat treatment chamber 3 and the purge chambers 4 and 5 by opening V₁-V₃, and the temperature of the remaining metal is cooled to about 500°C at the same time of discharging the generated gas within the heat treatment chamber to the gasification furnace (Fig. 2E). The present operation is performed for the purpose of preventing abnormal combustion of the generated gas due to a mixture of the oxygen and of minimizing oxidation of the remaining metal. After gas substitution within the heat treatment chamber 3 is completed, the doors G₂ and G₃ of the gasification furnace end are closed and next, the doors G₁ and G₄ closed against ambient air are slowly opened (Fig. 2F). From the waste material there is produced good quality metal having a high melting point and which is not oxidized by these series of operations.

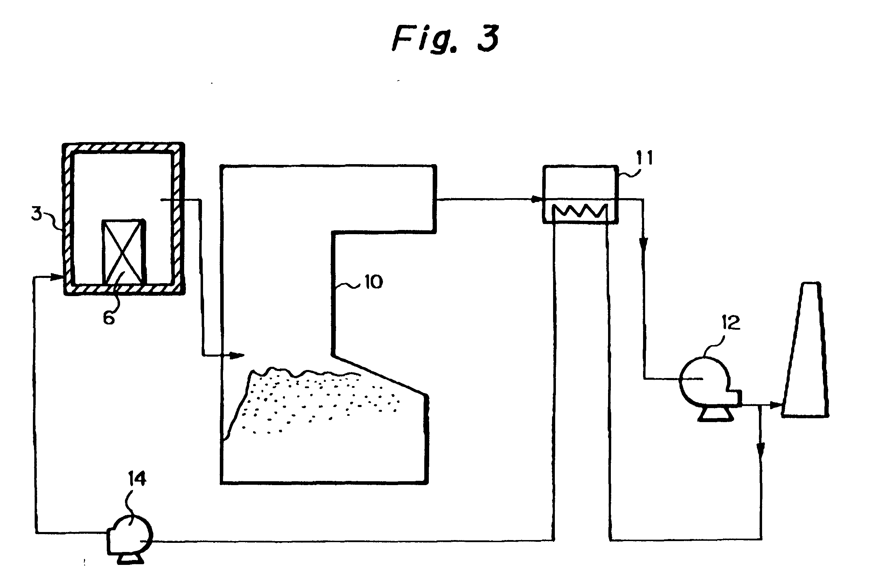

Fig. 3 is a totally schematic view in the case that the treating method in accordance with the invention is applied to a conventional incinerator. In this case, the purge front chamber and the purge rear chamber are provided in front of and at the rear of the heat treatment chamber in the same manner as depicted in fig. 1 for preventing abnormal combustion.

In Fig. 3, reference numeral 10 denotes a incinerator, and the heat treatment chamber 3 recovers the heat of the exhaust gas in the incinerator 10 by a heat exchanger 11 and the exhaust gas is introduced through a pressing fan 14. Accordingly, the heat treatment chamber 3 is kept at a temperature of 500 to 900°C and maintains a state of a small amount of oxygen, and plastic contained in the waste material therewithin are gasified and thermally treated. The generated gas is introduced to the incinerator 10 and burned.

By this structure, only non-oxidized good quality metal is taken out from the waste material, as shown in Fig. 1.

Then, the thermally treated waste material can be suitably treated by sieve selection, crushing and fine crushing after pressing as mentioned above.

In accordance with the present invention, waste material can be easily treated by gasifying plastics in the first process stage.

Further, since the treatment is performed under a reducing atmosphere with little or no oxygen present, non-oxidized good quality metal can be obtained, so that the metal can be recycled. A resulting product having an indefinite shape can be cut and finely crushed by pressing the thermally treated remaining metal so as to make a block, thereby obtaining an effect that "surrounding phenomenon" is not effected and recovery or separation of different metals can be easily performed.

Energy saving is achieved by using warm pressing.

As mentioned above, in accordance with the present invention, waste material from home appliances and electronic devices can be easily treated, which is difficult in a conventional treating method, thereby obtaining enabling metals used in these products to be recovered. Further, plastics which are conventionally hard to be treated and recycled can be made a good value of energy by the gasification, so that thermal recycling can be performed.

## Claims

1. A method of treating a composite waste material including plastic and metal, comprising the steps of:
bringing the composite waste material which is in an integral configuration, or after pressing or partly disassembled, excluding crushing, shredding or otherwise comminuting, into a heat treatment chamber (3) having a closable gas inlet (G₂), a closable gas outlet (G₁), a closable material charging opening, and a closable material discharging opening,
contacting the composite waste material directly with a high temperature exhaust gas through said closable gas inlet (G₂) or with a high temperature exhaust gas by burning under an air supply in the heat treatment chamber (3), the high temperature gas containing little or no oxygen, and thermally treating the composite waste material under a high temperature atmosphere at 500 to 900 °C to gasify the plastic in the waste material,
burning a part of a gas generated in the step of thermally treating for generating at least part of said high temperature gas, and
separating and recovering the metal under a warm state from the thermally treated composite waste material.

2. The method according to claim 1 further comprising the step of blowing out carbonic material which remains when plastic material is gasified from the metal by an exhaust gas of a furnace (1, 10) and/or the heat treatment chamber (3) for generating said high temperature gas.

3. The method according to claim 1 or 2, wherein the gas generated in the step of thermally treating is introduced through the closable gas outlet (G₁) to an incinerating apparatus (10) or a gasification melting apparatus (1) for treating a waste material in another system.

4. The method according to claim 1 or 2, wherein the gas generated in the step of thermally treating is introduced through the closable gas outlet (G₁) to a combustion chamber.

5. A plant for treating a composite waste material including plastic and metal, said plant comprising:
a heat treatment chamber (3) having a closable gas inlet (G₂), a closable gas outlet (G₁), a closable material charging opening, a closable material discharging opening, and a gas passage communicating with said closable gas inlet (G₂) for bringing the composite waste material which is in an integral configuration or partly disassembled in the heat treatment chamber (3) into direct contact with a high temperature exhaust gas at 500 to 900 °C containing little or no oxygen produced by a furnace (1, 10) and/or the heat treatment chamber (3),
means for blowing out carbonic material which remains when combustible material is gasified from the metal by an exhaust gas,
a combustion chamber in which a gas generated in the heat treatment chamber (3) is burned, and
a purge gas supply means (7) for supplying a purge gas into said heat treatment chamber to suppress burning in said heat treatment chamber.

## Patentansprüche

1. Verfahren zum Behandeln eines zusammengesetzten Abfallmaterials einschließlich von Plastik und Metall, das die folgenden Schritte aufweist:
Einbringen des zusammengesetzten Abfallmaterials, das sich in einer integralen Konfiguration befindet oder nach dem Pressen oder teilweise Zerlegen desselben, was Zerquetschen, Schredden oder andere Zerkleinerung ausschließt, in eine Wärmebehandlungskammer (3) mit einem schließbaren Gaseinlass (G₂), einem schließbaren Gasauslass (G₁), einer schließbaren Materialladeöffnung und einer schließbaren Materialausstossöffnung,
Kontaktieren des zusammengesetzten Abfallmaterials direkt mit einem Hochtemperaturabgas durch den schließbaren Gaseinlas (G₂) oder mit einem Hochtemperaturabgas durch Verbrennen unter einer Luftzufuhr in der Wärmebehandlungskammer (3), wobei das Hochtemperaturgas wenig oder keinen Sauerstoff enthält, und thermisches Behandeln des zusammengesetzten Abfallmaterials unter einer Hochtemperaturatmosphäre bei 500 bis 900° C zum Vergasen des Plastiks im Abfallmaterial,
Verbrennen eines Teils eines Gases, das im Schritt des thermischen Behandelns erzeugt wurde, und zwar für das Erzeugen von zumindest einem Teil des Hochtemperaturgases, und
Trennen und Rückgewinnung des Metalls unter einem warmen Zustand aus dem thermisch behandelten zusammengesetzten Abfallmaterial.

2. Verfahren gemäß Anspruch 1, das weiter den Schritt des Ausblasens von karbonischem bzw. kohlenstoffhaltigem Material aufweist, das zurückbleibt, wenn Plastikmaterial vom Metall vergast wird, und zwar durch ein Abgas eines Ofens (1, 10) und/oder der Wärmebehandlungskammer (3) für das Erzeugen des Hochtemperaturgases.

3. Verfahren gemäß Anspruch 1 oder 2, wobei das im Schritt des thermischen Behandelns erzeugte Gas durch den schließbaren Gasauslass (G₁) in eine Verbrennungsvorrichtung (10) oder eine Vergasungsschmelzvorrichtung
(1) eingeführt wird für das Behandeln eines Abfallmaterials in einem anderen System.

4. Verfahren gemäß Anspruch 1 oder 2, wobei das im Schritt des thermischen Behandelns erzeugte Gas durch den schließbaren Gasauslass (G₁) in eine Verbrennungskammer eingeführt wird.

5. Anlage zum Behandeln eines zusammengesetzten Abfallmaterials, das Plastik und Metall umfaßt, wobei die Anlage folgendes aufweist:
eine Wärmebehandlungskammer (3) mit einem schließbaren Gaseinlaß (G₂), einem schließbaren Gasauslass (G₁), einer schließbaren Materialladeöffnung, einer schließbaren Materialausstoßöffnung und einem Gasdurchlas, der mit dem schließbaren Gaseinlaß (G₂) in Verbindung ist, um das zusammengesetzte Abfallmaterial, das sich in einer integralen Konfiguration oder teilweise zerlegt in der Wärmebehandlungskammer (3) befindet, in direktem Kontakt mit einem Hochtemperaturabgas bei 500 bis 900° C zu bringen, das wenig oder keinen Sauerstoff enthält, und zwar erzeugt durch einen Ofen (1, 10) und/oder in der Wärmebehandlungskammer (3),
Mittel für das Ausblasen von karbonischem bzw. kohlenstoffhaltigem Material, das zurückbleibt, wenn verbrennbares Material vom Metall durch ein Abgas vergast wird,
eine Verbrennungskammer, in welcher ein Gas, das in der Wärmebehandlungskammer (3) erzeugt wird, verbrannt wird, und
Spülgaszufuhrmittel (7) für das Liefern eines Spülgases in die Wärmebehandlungskammer zur Unterdrückung des Verbrennens in der Wärmebehandlungskammer.

## Revendications

1. Procédé de traitement d'un déchet composite incluant du plastique et du métal, comprenant les étapes consistant à:
- introduire ledit déchet composite, dans sa configuration intégrale, ou suite à une compression, ou partiellement désassemblé, à l'exclusion de toute étape de broyage, de déchiquetage ou de toute autre réduction en morceaux, dans une chambre de traitement (3) ayant une entrée de gaz obturable (G₂), une sortie de gaz obturable (G₁), une ouverture de chargement de matériel obturable, et une ouverture de déchargement de matériel obturable,
- mettre en contact ledit déchet composite directement avec un gaz d'échappement à haute température au travers de ladite entrée de gaz obturable (G₂) ou avec un gaz d'échappement à haute température en le brûlant sous alimentation en air dans la chambre de traitement (3), le gaz à haute température contenant peu ou pas d'oxygène, et traiter thermiquement ledit déchet composite sous une atmosphère à une haute température allant de 500 à 900°C, de façon à gazéifier le plastique dans ledit déchet,
- brûler une partie du gaz engendré dans l'étape de traitement thermique, de façon à engendrer au moins une partie dudit gaz à haute température, et
- séparer et récupérer le métal, à l'état chaud, à partir du déchet composite traité thermiquement.

2. Procédé selon la revendication 1, comprenant en outre une étape consistant à extraire le matériau carbonique qui subsiste lorsque le matériau plastique est gazéifié à partir du métal par un gaz d'échappement d'un four (1, 10), et/ou de la chambre de traitement (3) pour engendrer ledit gaz à haute température.

3. Procédé selon la revendication ou selon la revendication 2, où le gaz engendré dans l'étape de traitement thermique est introduit au travers de la sortie de gaz obturable (G₁) dans un appareil d'incinération (10) ou un appareil de gazéification par mélange (1) pour traiter un déchet dans un autre système.

4. Procédé selon la revendication 1 ou selon la revendication 2, où le gaz engendré dans l'étape de traitement thermique est introduit au travers de la sortie de gaz obturable (G₁) dans une chambre de combustion.

5. Installation pour le traitement d'un déchet composite incluant du plastique et du métal, ladite installation comprenant:
- une chambre de traitement (3) ayant une entrée de gaz obturable (G₂), une sortie de gaz obturable (G₁), une ouverture de chargement de matériel obturable, et une ouverture de déchargement de matériel obturable,
- un passage de gaz communiquant avec ladite entrée de gaz obturable (G₂) pour introduire ledit déchet composite, dans sa configuration intégrale, ou partiellement désassemblé, dans une chambre de traitement thermique (3) en contact direct avec un gaz d'échappement à une haute température de 500 à 900°C contenant peu ou pas d'oxygène, et produit par un four (1, 10) et/ou de la chambre de traitement (3),
- des moyens pour extraire le matériau carbonique qui subsiste lorsque le matériau combustible est gazéifié à partir du métal par un gaz d'échappement, et
- une chambre de combustion dans laquelle est brûlé un gaz engendré dans la chambre de traitement thermique (3), et
- des moyens d'approvisionnement d'un gaz de purge (7) pour approvisionner ladite chambre de traitement thermique le gaz de purge en, de façon à supprimer le brûlage dans ladite chambre de traitement thermique.
